# EUROPEAN PATENT APPLICATION

(11) **EP 4 257 226 A1**
(43) Date of publication of application: **11.10.2023**
(21) Application number: 22166694.4
(22) Date of filing: 05.04.2022
(51) Int. Cl.: B01D 53/04, B01D 53/047, B01J 20/22, B01J 20/34, B01D 53/62, A01G 7/02, A01G 9/18, F24F 8/10, A62B 11/00

(54) **CAPTURE DEVICE AND METHOD FOR REMOVING CO2 FROM AIR, AND PRODUCTION SYSTEM**

(71) Applicant: Airbus (S.A.S.), 31700 Blagnac (FR); Airbus Operations GmbH, 21129 Hamburg (DE)
(72) Inventor: Bulmann, Antje, 21129 Hamburg (DE); Matthias, Carsten, 21129 Hamburg (DE); Mitschke, Denis, 21129 Hamburg (DE); Markgraf, Sebastian, 21129 Hamburg (DE); Horn, Tobias, 21129 Hamburg (DE); Fetter, Viktor, 21129 Hamburg (DE)
(74) Representative: KASTEL Patentanwälte PartG mbB

(57) **Abstract**

In a method and a system for removing CO2 from air, the air is supplied to a capture device (10) comprising at least one bed (11,12) comprising solid amine material (13), and an air or gas flow (F1, F2) through the bed (11, 12) is generated. The bed (11, 12) is operated in an adsorption mode (A) in which CO2 contained in the air is adsorbed by the solid amine material (13). The bed (11, 12) may also be operating in a desorption mode (B) in which CO2 is removed from the solid amine material (13). CO2 obtained in the desorption mode (B) is locally supplied to a production site (30a) that consumes CO2. CO2 lean air obtained in the adsorption mode is locally supplied to a production site (30b) that produces CO2. The production sites (30a, 30b) may comprise food production, farming, breweries etc., as well as other applications.

## Description

The invention relates to a capture device for removing carbon dioxide (CO2) from air. Further, the invention relates to a production system. In addition, the invention relates to a method for removing CO2 from air.

The invention is in particular applicable for the food industry like e.g. farming, food production and storage, breweries etc., but also for industrial applications, in particular in the chemical industry, like e.g. for producing components for industrial manufacturing.

The reduction of CO2 emissions and even the removal of already existing CO2 from the atmosphere is a key driver in the fight against global warming and climate change. Climate change is affecting the world in multiple ways. One problem is that climate change leads to high stress for food production by global warming and the shift of agricultural areas. Thus, one future challenge will be the food supply of the increasing global population under the additional stress of global warming and shifts in the agriculturally suitable areas.

Greenhouse or indoor farming are potential solutions for sustainable food supply, like e.g. closed loop growing towers and next generation greenhouses. Common greenhouse CO2 supply is either provided via CO2 bottles or by direct utilisation of exhaust gases from combustion engines or from power plants. However, bottles need to be transported, leading to an increasing price, handling effort and CO2 footprint. The use of CO2 from local combustion engines is expensive as well and increases the CO2 footprint. The utilisation of CO2 from power plants limits the deployable radius of the greenhouse.

CO2 scrubbing devices are used for removal of atmospheric CO2 or closed loop working environments such as submarines or space stations.

Airbus Defence and Space has e. g. developed a carbon concentration assembly for the use on-board the international space station (ISS). The goal of the system is the removal of the human generated CO2 for a crew of 3 from the environment of the station. The same system has later been adapted for the use on-board of submarines for a crew size up to 70 sailors.

In the following, some known devices and methods for the removal of CO2 from the atmosphere are shortly discussed.

EP 2 397 212 B1 describes a method for regenerating an adsorber on board a submarine, wherein the adsorber is present in the interior of the submarine for binding metabolically generated CO2-containing harmful gases. The thermal energy for regenerating the adsorber is generated by burning a hydrocarbon containing energy carrier with oxygen. At least one combustion product is transferred outboard via the compressor.

EP 2 965 800 B1 discloses a method for processing biogas of a biogas plant, in which in a method step a membrane process or a reactive process is carried out and in at least one further method step an adsorption and/or absorption process is carried out.

EP 2 977 093 B1 discloses a method for separating carbon dioxide from a gas mixture that consists of breathing air, with a life sustaining device in a submarine. In a first method step the gas mixture is fed to an adsorption unit under at least one first pressure, wherein a pressure container is used as an adsorption unit. In a second method step a gas mixture is conveyed out of the adsorption unit under a second pressure that is higher than the first pressure. Carbon dioxide is conveyed directly out of the submarine without subsequent densification and without using a compressor.

EP 3 549 875 A1 describes a regenerative air renewal system for a manned spatial body, with at least one reaction device which is intended to recover oxygen from metabolic carbon dioxide in a cabin of the spatial body. The reaction device is provided for feeding at least part of a substance produced by means of the reaction device to a drive unit of the spatial body.

EP 3 670 362 A1 discloses a closed environmental compartment with a life support system configured to remove metabolic carbon dioxide from the compartment's interior atmosphere, and with at least one work chamber, which is configured for a performance of an extraction and/or purification process with carbon dioxide as a solvent. The carbon dioxide required for the extraction and/or purification process in the work chamber is supplied by the life support system. The work chamber is connected via lines directly to a line system, in particular for the transport of carbon dioxide, of the life support system. The work chamber is coupled via lines and/or conditioning means directly to the life support system.

It is the object of the invention to provide a method and a device for reducing atmospheric CO2 and improving food supply.

According to a first aspect, the invention provides a capture device for removing CO2 from air, comprising at least one gas inlet for supplying air into the capture device, at least one bed connected to the gas inlet and comprising solid amine material, a flow generator for generating an air or gas flow through the bed, and at least one gas outlet connected to the bed, wherein the bed is operable in an adsorption mode (A) in which CO2 contained in the air or gas flow is adsorbed by the solid amine material, and in a desorption mode (B) in which CO2 is removed from the solid amine material, wherein the capture device is directly connected
1.1. to a production site that consumes CO2 for locally supplying the removed CO2 in the desorption mode, and/or
1.2. to a production site that produces CO2 for supplying CO2 lean air obtained in the adsorption mode.

In particular, the production site that consumes CO2 and/or the production site that produces CO2 is configured for agricultural production. In that case it is for example a farming station or a greenhouse for producing plants, mushrooms, yeast, etc.

However, the production site that consumes CO2 and/or the production site that produces CO2 may also be an industrial production site, in particular a chemical production site.

In particular, both types of production sites can be combined to complement each other in a synergetic manner.

Preferably, the capture device comprises at least a second bed comprising solid amine material.

The second bed is preferably operable in the adsorption mode and/or in the desorption mode.

Preferably, at least one of the beds is operable in the adsorption mode while at least another bed is operable in the desorption mode.

Preferably, the capture device is configured for locally providing CO2 lean air obtained in the adsorption mode to a working environment of people working close-by the production site and/or to the production site that produces CO2.

Preferably, the capture device comprises a resupply line resupply line for resupplying air from the production site that consumes CO2 to the capture device for further desorption and supplying CO2 enriched air to the production site that consumes CO2.

Preferably, the capture device is configured for desorption with a gas flow from the environment and/or with a purge gas.

Preferably, the capture device is configured for supplying the CO2 rich gas and/or the concentrated CO2 to a chemical industry plant when the capture device is providing CO2 lean air to the production site that produces CO2.

Preferably, the capture device is configured for receiving CO2 rich air from the production site that produces CO2 and supplying the CO2 rich gas to the bed operable in the adsorption mode.

Preferably, the capture device is configured for activating the desorption by temperature increase of the solid amine material to increase the partial pressure of bound CO2.

Preferably, the capture device is configured for activating the desorption by evacuation of the bed below the partial pressure of bound CO2.

According to a second aspect, the invention provides a production system comprising a production site and a capture device according to one of the preceding claims, wherein one or more gas supply lines are directly connecting the production site to the capture device, for supplying CO2 rich gas from the capture device to the production site and/or for supplying CO2 rich gas from the production site to the capture device.

According to a third aspect, the invention provides a method for removing CO2 from air, comprising: supplying air to a capture device comprising at least one bed comprising solid amine material; generating an air or gas flow through the bed; operating the bed in an adsorption mode in which CO2 contained in the air is adsorbed by the solid amine material, operating the bed in a desorption mode in which CO2 is removed from the solid amine material, locally supplying the CO2 obtained in the desorption mode to a production site that consumes CO2 and/or locally supplying CO2 lean air obtained by the adsorption to a production site that produces CO2.

Preferably, the method comprises locally providing CO2 lean air obtained in the adsorption mode to a working environment of people working within the production site and/or to the production site that produces CO2.

Preferably, the desorption is performed by using a gas flow from the environment and/or a purge gas.

Preferably, the CO2 rich gas and/or the concentrated CO2 is supplied to a chemical industry plant while CO2 lean air is supplied to the production site that produces CO2.

Preferably, the CO2 rich air is taken from the production site that produces CO2 and used for the adsorption to obtain CO2 lean air, wherein the obtained CO2 lean air is supplied to the production site that produces CO2 rich air.

Preferably, a thermal swing is performed and/or a pressure swing process is used for adsorption and/or for desorption.

Preferably, the desorption is activated by temperature increase of the solid amine material to increase the partial pressure of bound CO2.

Preferably, the desorption is activated by evacuation of the bed below the partial pressure of bound CO2.

Preferably, a thermal swing desorption is performed using one or more of the processes steam generation, microwave process, induction heating, fluid heating.

Preferably, a pressure swing process is performed for adsorption, using adsorption at increased pressure and desorption at ambient pressure.

Preferably, a pressure swing process is performed for desorption, using adsorption at ambient pressure and desorption at a reduced pressure.

Preferably, the capture device according to the invention and/or the production system according to the invention is used in the method.

The proposed device and processes herein provides a two fold approach to tackle both problems by reducing atmospheric CO2 and improving plant growth.

Additionally, the system can also be used to collect CO2 in particular from farming applications such as mushroom cultivation or fruit storage for utilisation in chemical processes to reduce the carbon footprint and close the carbon cycle.

The invention reduces climate change and global warming, while providing sustainable food supply. The provision of CO2 to greenhouse according to the invention leads to higher yield. In addition, considering other agricultural applications which generate CO2 contributing to global warming, the invention provides CO2 removal and utilisation.

In particular, the invention provides a combination of the greenhouse application with a CO2 capture device for performing Operation (A), which comprises scrubbing of atmospheric CO2 and supply to the greenhouse for improvement of plant growth and higher yield, and Operation (B), which comprises scrubbing of CO2 from farming application and provision of CO2 for further industrial application.

In particular, the invention achieves the following advantages:
Continuous, scalable local CO2 supply without need for CO2 transport or bottle handling.
Increased degree of freedom, greenhouse location not restricted to spatial vicinity of CO2 generation.
Provision of CO2 lean air to working environment.
Capture of atmospheric CO2 and utilisation for plant growth
Capture of agricultural CO2 and utilisation for chemical industry, closing of carbon cycle.

Characteristics and advantages described in relation to the capture device and to the production system are also related to the method for removing CO2 from the air or from a gas.

In the following, exemplary embodiments of the invention showing further advantages and characteristics are described in detail with reference to the figures, in which:
- **Fig. 1**: shows a schematic sectional view of a CO2 capture device which may be used in a preferred embodiment of the invention;
- **Fig. 2**: shows a schematic flow chart of the method according to a preferred example of the invention, wherein a production site forms a CO2 sink; and
- **Fig. 3**: shows a schematic flow chart of the method according to another preferred example of the invention, wherein a production site forms a CO2 well.

In the figures, similar or identical elements and features are designated by the same reference numbers. The features, functions and advantages discussed herein and shown in the embodiments can be achieved independently and combined in other embodiments. The method steps can be performed in a different order.

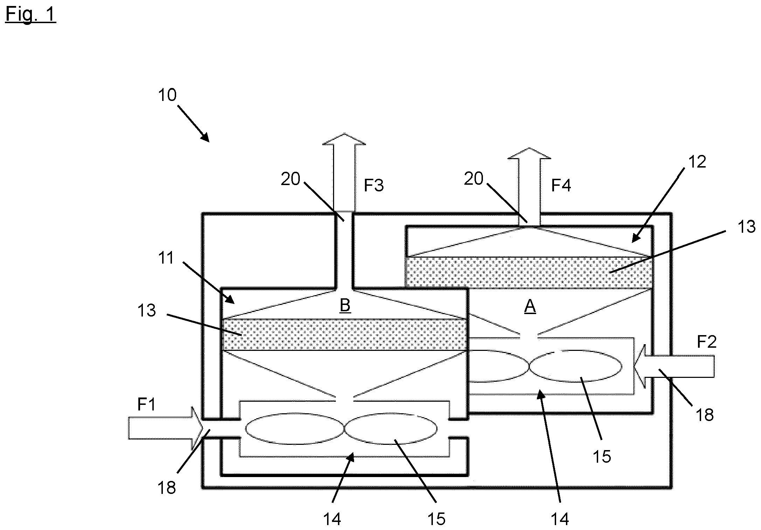

**Fig. 1** shows a carbon dioxide (CO2) capture device 10 used according to a first embodiment of the invention. The CO2 capture device comprises a dedicated number of beds 11, 12 filled with a solid amine material formed by solid amine resin 13, in particular e.g. Astrine^{™}. The device 10 is equipped with a flow generator 14 formed by e.g. a fan 15 to provide a gas flow F1, F2 through the beds 11, 12. In this example, each fan 15 is assigned to one bed 11, 12 for providing the gas flow through that bed.

Each bed 11, 12 is connected to an inlet flow channel 18 and to an outlet flow channel 20 having the appropriate sizing for the respective gas or air flow. Each bed 11, 12 is equipped with a thermal management not shown in the figure for temperature control of the bed. Additional process equipment like valves, hatches and sensors not shown in the figure are used to control and monitor the operation.

Each bed 11, 12 comprises two modes of operation, namely an adsorption mode A and a desorption mode B. During adsorption A, in this example performed e.g. by bed 12, a CO2 rich gas flow F2 is pushed through the bed 12 by the fan 15. The CO2 is adsorbed to the resin 13. During desorption B, in this example performed e.g. by bed 11, the CO2 is removed from the resin 13 and transported out of the device 10.

If a gas flow is applied during the adsorption phase A, wherein a CO2 rich gas flow F2 is entering the capture device 10 through inlet flow channel 18 of bed 12 and pushed through bed 12, a CO2 lean gas flow F4 is emanating from the device 10 through outlet flow channel 20 of bed 12.

The desorption process B can be activated by two physical principles, or a combination of both. These are thermal swing comprising a temperature increase of the resin to increase the partial pressure of bound CO2, and pressure swing comprising the evacuation of the bed below the partial pressure of bound CO2.

If a gas flow is applied during the desorption phase B, wherein a CO2 lean gas flow F1 is entering the capture device 10 e.g. through inlet flow channel 18 of bed 11 and pushed through bed 11 in this example, a CO2 enriched gas flow F3 is emanating from the device 10 through outlet flow channel 20 of bed 11. If desorption B is performed without further gases, a concentrated CO2 flow F3 is achieved, which usually may have traces of residual gas from the bed volume.

For a continuous operation a number of at least 3 beds are provided.

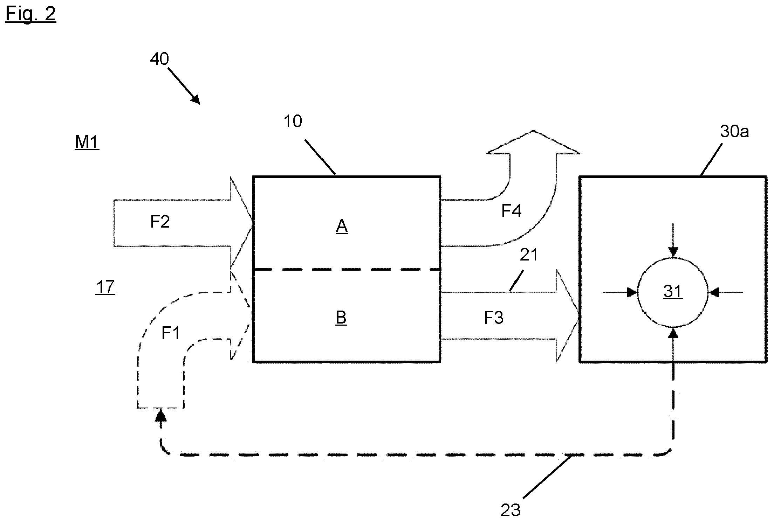

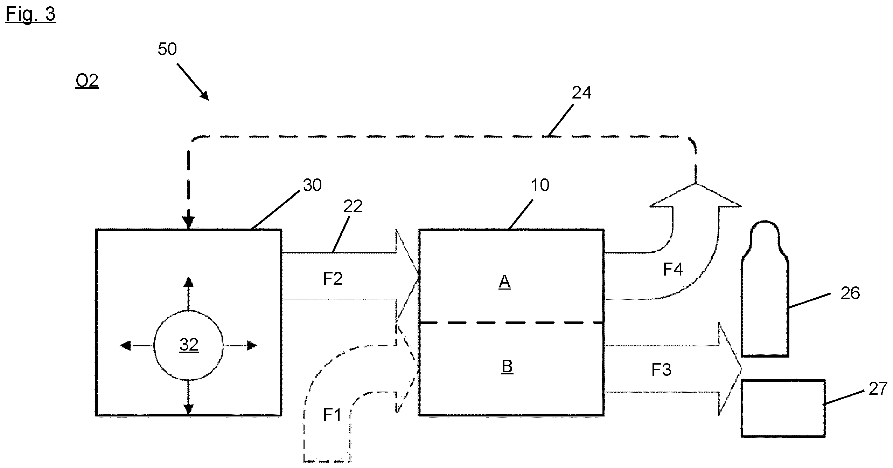

**Figs. 2** **and** **3** show a production system 40, 50 according to preferred embodiments of the invention. The production systems 40, 50 each comprise a CO2 capture device 10 as discussed herein and a production site 30a, 30b configured for farming of plants for food production in this specific example. Here, the operational principles of CO2 capturing for farming are shown.

However, the principles shown here in detail are not limited to farming. Other embodiments comprise other industrial applications, in particular for the chemical industy.

The capture device 10 of production system 40 depicted in Fig. 2 shows CO2 supply with air from the environment (F2), while the capture device of production system 50 depicted in Fig. 3 shows CO2 extraction from air supplied from production site 30 (F2) for footprint reduction or further usage.

In both embodiments, the CO2 capture device 10 is combined with production site 30a, 30b and operates in two different modes of operation.

In a first operation mode M1, as shown in Fig. 2, environmental CO2 scrubbing is performed, and supply of the CO2 to the production site 30a for support of plant growth. In a second operation mode M2, as shown in Fig. 3, CO2 scrubbing from production site 30b and provision of the CO2 for chemical industry usage is performed.

In the following, the operation modes M1 and M2 are described in more detail.

### Operation mode M1 (see Figs. 1 and 2):

The CO2 capture device 10 of production system 40 or at least one of bed thereof is operated in the adsorption mode A, with air supplied from the environment 17 received as air flow F2 through inlet flow channel 18. In the capture device 10, the air flow F2 is pushed by fan 15 through one of the beds 11, 12, e.g. through bed 12 in Fig. 1. The CO2 is adsorbed to the resin 13, and resulting CO2 lean air is emanating as CO2 lean gas flow F4 from capture device 10, and provided to the working environment of employees working at or close to the production site 30a.

A second bed, e.g. bed 11 in Fig. 1, is operated in the desorption mode B. The bed is supplied with air resupplied from production site 30a to the CO2 capture device 10 through resupply line 23, which directly connects production site 30a to capture device 10. The resupplied air enters as gas flow F1 through inlet flow channel 18 into capture device 10, where it is enriched with CO2 when flowing through bed 11.

The resulting CO2 rich air is supplied as a CO2 rich air flow F3 through outlet channel 20 and a gas supply line 21, which is directly connecting CO2 capture device 10 to production site 30a which forms a CO2 sink 31. There it is consumed by growing plants. Equally, a desorption with a gas flow from the environment 17 or without additional flow and concentrated CO2 is possible.

### Operation mode M2 (see Figs. 1 and 3):

Certain farming applications such as mushroom cultivation or fruit storage produce CO2 are forming a CO2 well 32. The production system 50 in Fig. 3 comprises a capture device 10 as discussed herein and a production site 30b forming a CO2 well 32, directly connected to each other.

CO2 rich air taken from the production site 30b is supplied as air flow F2 through inlet flow channel 18 and a gas supply line 22, which is directly connecting capture device 10 to production site 30b, to the adsorber bed, e.g. to bed 12 working or being operated in the adsorption mode A. There, the CO2 is adsorbed to the resin 13, and resulting CO2 lean air is provided through outlet channel 20 as a CO2 lean air flow F4. The CO2 lean air flow F4 is resupplied via resupply line 24, which is directly connecting farming application or station 30b with CO2 capture device 10, back to production site 30b and/or to the working environment of the employees working there.

A second bed, e.g. bed 11 in Fig. 1, is operated in desorption mode B. Desorbed CO2 taken from capture device 10 through outlet flow channel 20 is provided as a CO2 rich gas flow F3, which may be stored in concentrated form or even be purified by further process station. The CO2 may be stored in a storage device, e.g. formed as a bottle 26, and/or supplied to further industrial application, in particular to the chemical industry 27.

A dedicated purge gas like e.g. hydrogen may be used as a gas flow F1 supplied to capture device 10 for mixing of the CO2 and provision to further processes such as generating power for the processes. One example is the use of hydrogen and the supply to a Sabatier reactor for the manufacturing of methane.

The method according to the invention may comprise one or more of the following features:
Use of steam generation process for thermal swing desorption.
Use of microwave process for thermal swing desorption.
Use of induction heating process for thermal swing desorption, wherein the solid amine resin is e.g. mixed with metal beads.
Use of electrical heating process for thermal swing desorption.
Use of thermal fluid heating process for thermal swing desorption.
Use of pressure swing process for adsorption, adsorption at increased pressure and desorption at ambient pressure.
Use of pressure swing process for desorption, adsorption at ambient pressure and desorption at reduced pressure.
Dedicated use for specialised agricultural applications, like e.g. breweries, but also for other industrial applications.

Particular benefits of the method described herein are:
Continuous, scalable local CO2 supply without need for CO2 transport or bottle handling.
Increased degree of freedom, greenhouse location not restricted to spatial vicinity of CO2 generation (e.g. power plant).
Provision of CO2 lean air to working environment.
Capture of atmospheric CO2 and utilisation plant growth of capture of agricultural CO2 and utilisation for chemical industry, closing of carbon cycle

### List of reference numbers:

- 10: CO2 capture device
- 11, 12: beds
- 13: solid amine resin
- 14: flow generator
- 15: fan
- 17: environment
- 18: inlet flow channel
- 20: outlet flow channel 20
- 21: gas supply line
- 22: gas supply line
- 23: resupply line
- 24: resupply line
- 26: bottle
- 27: chemical industry
- 30: production site
- 31: CO2 sink
- 32: CO2 well
- 40, 50: production system

- A: adsorption mode
- B: desorption mode

- F1, F2: gas flow in
- F3, F4: gas flow out

- M1, M2: Operations

## Claims

1. Capture device for removing CO2 from air, comprising
at least one gas inlet (18) for supplying air into the capture device (10),
at least one bed (11, 12) connected to the gas inlet and comprising solid amine material (13),
a flow generator (14) for generating an air or gas flow (F1, F2) through the bed (11, 12), and
at least one gas outlet (20) connected to the bed (11, 12),
wherein the bed (11, 12) is operable
in an adsorption mode (A) in which CO2 contained in the air is adsorbed by the solid amine material (13), and
in a desorption mode (B) in which CO2 is removed from the solid amine material (13),
wherein the capture device (10) is directly connected
1.1. to a production site (30a) that consumes CO2 for locally supplying the removed CO2 in the desorption mode (B), and/or
1.2. to a production site (30b) that produces CO2 for supplying CO2 lean air obtained in the adsorption mode (A).

2. Capture device according to claim 1, **characterized in that** it comprises at least a second bed (11, 12) operable in the adsorption mode (A) and/or in the desorption mode (B), wherein at least one of the beds (11, 12) is operable in the adsorption mode (A) while at least another one of the beds (11, 12) is operable in the desorption mode (B).

3. Capture device according to claim 1 or 2, **characterized in that** it is configured for locally providing CO2 lean air obtained in the adsorption mode (A) to a working environment of people working at the production site (30a; 30b) and/or to the production site that produces CO2.

4. Capture device according to one of the preceding claims, **characterized in that** the production site (30a; 30b) that produces or consumes CO2 comprises an agricultural production site and/or a chemical production site.

5. Capture device according to one of the preceding claims, **characterized by** a resupply line (23) for resupplying air from the production site (30a) that consumes CO2 to the capture device (10) for further desorption and supplying CO2 enriched air to the production site (30a) that consumes CO2.

6. Capture device according to one of the preceding claims, **characterized in that** it is configured for
6.1 desorption with gas flow (F1) from the environment and/or with a purge gas; and/or
6.2 supplying the CO2 rich gas and/or the concentrated CO2 to a chemical industry plant (27) when the capture device is providing CO2 lean air to the production site (30b) that produces CO2.

7. Capture device according to one of the preceding claims, **characterized in that** it is configured for receiving CO2 rich air from the production site that produces CO2 and supplying the CO2 rich air from farming to the bed (11, 12) operable in the adsorption mode (A).

8. Production system, comprising a production site (30a; 30b) and a capture device (10) according to one of the preceding claims, wherein one or more gas supply lines (21, 23; 22, 24) are directly connecting the production site (30a; 30b) to the capture device (10), for supplying CO2 rich gas (F3) from the capture device (10) to the production site (30a) and/or for supplying CO2 rich gas (F2) from the production site (30b) to the capture device (10).

9. Method for removing CO2 from air, comprising:
- supplying air to a capture device (10) comprising at least one bed (11,12) comprising solid amine material (13);
- generating an air or gas flow (F1, F2) through the bed (11, 12);
- operating the bed (11, 12) in an adsorption mode (A) in which CO2 contained in the air is adsorbed by the solid amine material (13),
- operating the bed (11, 12) in a desorption mode (B) in which CO2 is removed from the solid amine material (13),
- locally supplying the CO2 obtained in the desorption mode (B) to a production site (30a) that consumes CO2 and/or locally supplying CO2 lean air obtained by the adsorption to a production site (30b) that produces CO2.

10. Method according to claim 9, **characterized by** locally providing CO2 lean air obtained in the adsorption mode (A) to a working environment of people working at the production site (30a; 30b) and/or to the production site (30b) that produces CO2.

11. Method according to claim 9 or 10, **characterized in that** the desorption is performed by using a gas flow (F1) from the environment and/or a purge gas.

12. Method according to one of claims 9 to 11, **characterized in that** CO2 rich gas and/or the concentrated CO2 obtained in the desorption mode (B) is supplied to a chemical industry plant (27) while CO2 lean air is supplied to the production site that produces CO2.

13. Method according to one of claims 9 to 12, **characterized in that** CO2 rich air
13.1. is taken from the production site (30a) that produces CO2 and used in the adsorption mode (A) to obtain CO2 lean air, wherein the obtained CO2 lean air is resupplied to that production site (30a); and/or
13.2. is taken from the production site (30b) that consumes CO2 and used in the desorption mode (B) to obtain the CO2 rich gas and/or concentrated CO2 for supplying it to industrial applications (27).

14. Method according to one of claims 9 to 13, **characterized in that**
14.1. the desorption is activated by temperature increase of the solid amine material (13) to increase the partial pressure of bound CO2, and/or
14.2. the desorption is activated by evacuation of the bed (11, 12) below the partial pressure of bound CO2; and/or
14.3. a thermal swing desorption is performed using one or more of the processes steam generation, microwave process, induction heating, fluid heating, and/or
14.4. a pressure swing process is performed for adsorption, using adsorption at increased pressure and desorption at ambient pressure, and/or
14.5. a pressure swing process is performed for desorption, using adsorption at ambient pressure and desorption at a reduced pressure.

15. Method according to one of claims 9 to 14, **characterized by** using the capture device (10) according to one of claims 1 to 7 and/or the production system (30a; 30b) according to claim 8.
